# EUROPEAN PATENT SPECIFICATION

(11) **EP 1 227 732 B1**
(45) Date of publication and mention of the grant of the patent: **16.07.2003**
(21) Application number: 99953737.6
(22) Date of filing: 09.11.1999
(51) Int. Cl.: A23C 1/05, B01D 1/18

(54) **A PROCESS FOR PRODUCING A SPRAY DRIED, AGGLOMERATED POWDER OF BABY FOOD, WHOLE-MILK OR SKIM-MILK, AND SUCH POWDER**
VERFAHREN ZUR HERSTELLUNG VON SPRÜHGETROCKNETEM,AGGLOMERIERTEM PULVER VON BABYNAHRUNG,MAGERMILCH ODER VOLLMICH UND DAS HERGESTELLTE PULVER
PROCEDE PERMETTANT DE PRODUIRE UN ALIMENT POUR NOURRISSON, UN LAIT ENTIER OU UN LAIT ECREME SOUS FORME DE POUDRE AGGLOMEREE SECHEE PAR PULVERISATION, ET POUDRE PRODUITE

(43) Date of publication of application: 07.08.2002
(73) Proprietor: NIRO A/S, DK-2860 Soeborg (DK)
(72) Inventor: S RENSEN, Jens, Mourits, DK-2830 Virum (DK); HANSEN, Ove, Emil, DK-3450 Aller d (DK); SCHOLTEN, Martin, Andreas, Gr nlund, DK-2960 Rungsted Kyst (DK)
(74) Representative: Simonsen, Christian Rosendal
(86) International application number: DK9900612
(87) International publication number: WO01033971

(56) References cited:
- EP-A1- 0 097 484
- EP-A1- 0 378 498
- EP-A2- 0 223 509
- WO-A1-91/12074
- WO-A2-97/14288
- US-A- 5 446 974
- US-A- 5 782 010

## Description

### Field of the invention

The present invention relates to spray drying of milk products, more specificly whole-milk, skim-milk and baby food products of the types termed infant formula and follow-up formula.

### Background of the invention

Several processes are known for spray drying in which the resulting particles are agglomerated in the very spray drying step or in subsequent steps combined therewith.

The present invention relates to the type of processes in which the liquid concentrates to be spray dried are atomized into a stream of hot drying gas in a spray drying chamber, and the particles formed thereby treated further in a fluidized bed maintained in the bottom portion of the drying chamber. The product recovered from said fluidized bed may be subjected to an after-treatment in a fluidized bed outside the drying chamber.

By such a drying system, often termed Multi Stage Drying (MSDTM), much more efficiently agglomerated powders can be obtained than in the prior "straight through" system having no fluidized bed in the drying chamber, i.a. because the existence of the fluidized bed in the bottom of the spray drying chamber permits higher average humidity also in the upper portion of the chamber and the system may be operated to have a substantial amount of fine particles blown off from the fluidized layer and reintroduced in the wet atomizer cloud in the upper part of the chamber (EP 97484, Niro). Furthermore, a certain agglomeration may take place in the fluidized bed itself and, with proper recycling of fines, in zones near the lower part of the chamber walls (EP 729383, Niro).

It is also assumed that in spray drying processes performed in drying chambers having rigid internal gas filters an agglomeration may take place between the particles settling on the filter surfaces (WO 97/14288, Niro).

EP 0223509 A2 discloses a process in which a spray drying takes place in a horizontally extended chamber in the bottom of which a fluidized bed is maintained. Horizontally displaced from the region of the chamber, wherein the spray drying takes place, filter membranes are provided for, through which membranes exhaust gas is removed from the chamber. Solids deposited on the filter membranes form agglomerates on the filter surface from where they are are dislodged. The thus dislodged solids are dispersed in the drying gas and merged with the fluidized bed. However, by said prior art process, the contact between particles dislodged from the filter surfaces and moist sticky particles is not as effective for agglomerate formation as the contact obtained in the process of the present invention, as explained in more detail below.

In spite of the several possibilities existing for obtaining an agglomeration in connection with the spray drying process it has hitherto been mandatory to apply a certain re-wetting to obtain a product consisting of the desired large agglomerates. The term "re-wetting" is herein used in a somewhat broader sense than customary within the art of spray drying, and refers to a process in which solid particles are contacted with liquid droplets to create a very sticky surface of the particles hit by the droplets. While the particles are thus temporarily very sticky they adhere together to form large agglomerates which by drying form rather dense granules which only slowly disintegrate when suspended in water.

Re-wetting with a view of increasing the degree of agglomeration may be performed as an after-treatment by spraying water or another liquid onto the powder in an external fluidized after-treatment bed, or it may be performed by introducing fine particle fractions into the drying chamber near the location for atomization of the feed liquid, whereby said particles are hit by the atomized droplets while these are still liquid as it is customary within the art, e.g. in the well-known "straight through" process. Also it is known to use a combination of these two measures as described, inter alia, in EP 0 705 062. Furthermore, it has been suggested to spray water or feed liquid over the internal fluidized layer in the spraying chamber.

However, the use of re-wetting for agglomeration purposes has certain disadvantages.

In case the re-wetting is made not with a portion of the feed liquid to be dried but just with water, as it is customary, the process obviously has an increased energy consumption necessary for evaporating the extra water required for the re-wetting.

Within the dairy industries it has been recognized that the products of re-wetting processes may be inferior due to bacteriological contamination and also organoleptic qualities may be impaired.

The present inventors have also experienced that when agglomerates are produced by processes involving re-wetting in the hot atomizer zone, a special product failure becomes important, when baby foods, whole-milk or skim-milk powders to be re-constituted as drinkable liquids for human consumption are produced. Said failure, normally termed "grains", manifests itself as very small lumps of powder visible on the walls of a bottle or glass above the level of a liquid having been agitated to disperse the agglomerated powder therein.

Although said grains may be of no importance from a nutritional point of view, a large amount of grains may by the consumer be regarded as an indication of inferior product quality, for which reason there is a substantial commercial interest in avoiding or reducing the amount of grains. However, the formation of grains in agglomeration processes recycling fine particles to the atomizer zone is regarded as unavoidable, and may set a maximum limit for the degree of agglomeration used in industrial production.

A further drawback of the prior art processes involving re-wetting as an after-treatment for obtaining or completing the desired agglomeration is the fact that the operation thereof requires skill and manpower, especially to avoid over-wetting and resulting product deterioration.

### Summary of the invention

We have now found that it is possible to obtain a high-quality spray dried product of baby food, whole-milk or skim-milk, agglomerated to the desired extent but showing less grains when reconstituted in water than usual for similarly agglomerated, commercial products. Also other product characteristics are improved, resulting in superior organoleptical properties.

The above desired qualities are obtained in a single drying apparatus, possibly followed by a conventional after-drying and cooling.

The invention is partly based on the recognition that improved qualities may be obtained by increasing the proportion of agglomeration taking place on and along the inner surface of a part of the conical bottom section of a spray drying chamber, thereby substantially reducing the amount of fine particles being rewetted by contact with droplets in the atomizer zone in the drying chamber and removing the need for re-wetting the product in the internal or in an external fluidized bed.

Said increase of the proportion of agglomeration taking place on and along the conical bottom section is obtained by collecting fine particles on suitably placed internal filters, being flexible to enable particle release by a short counter blow of a moderate amount of pressurized air.

In the above cited WO 97/14288, Niro, internal filters of rigid materials, e.g. sintered metal, are disclosed. When fine particles collected on such filters have to be efficiently released, it is necessary to apply a very strong counter blow, meaning that a substantial amount of the fine particles released thereby is spread and dispersed into a large part of the chamber volume. In contrast thereto, particles may be released from the flexible filters by a smaller counter blow at lower pressure which does not spread the particles but allow them to fall directly down on the conical section. The reason for this difference is that when particles have to be released from a rigid filter they are influenced directly of the counter blow air and carried away thereby, whereas each portion of a flexible filter itself receives a short movement or dislocation by the impact of a short counter blow whereby release of particles is effected without spreading thereof.

Thus, the invention deals with a process for producing a spray dried baby food, whole-milk or skim-milk product in which process agglomeration is obtained with less simultaneous increase of the grains rate than usual. The process comprising the following steps:
atomizing a liquid concentrate of baby food, whole-milk or skim-milk as droplets centrally into the upper part of a drying chamber of which at least the lower portion is defined by a downward tapering frusto-conical wall;
introducing drying gas at a temperature of 160-400° C downwards from the top of said chamber around the atomized droplets to partially dry these to moist particles and carry them in a downward widering direction;
maintaining a fluidized particle bed at a temperature of 45-80° C in the bottom of the drying chamber and/or in a lower extension thereof, 1 by means of an upward stream of fluidizing gas for drying, classifying and agglomeration of the particles therein;
withdrawing a stream of gas comprising spent drying gas introduced at the top of the chamber and gas from said fluidized bed and at a temperature of 60-95° C from the chamber through flexible filter elements within said chamber, thereby settling fine particles having been entrained by said stream on the surface of the filter elements;
releasing the fine particles settled on the flexible filter elements by short, moderate counter blows to cause them to fall down on the frusto-conical wall at a location at level with or above a horizontal ring-shaped area on said wall where the largest concentration of said moist particles would have reached said wall if no fine particles from the filter elements had fallen down thereon, from which location said fine particles slide downwards along the wall as a covering layer to reach said fluidized particle layer;
withdrawing an agglomerated product from the fluidized bed fulfilling one of the following three combinations of agglomerate size distribution and grains rate (dertermined by the method of analysis described herein):
   (i) : D₁₀ (< 10%): 50-100 µm, D₅₀ (< 50%): 150-225 µm, D₉₀ (< 90%): 350-450 µm and grains = 1;
   (ii): D₁₀ (< 10%): 100-200 µm, D₅₀ (< 50%): 225-400 µm, D₉₀ (< 90%): 450-600 µm, and grains above 1 but below or equal to 2;
   (iii): D₁₀ (< 10%): 200-300 µm, D₅₀ (< 50%): 400-600 µm, D₉₀ (< 90%): 600-900 µm, and grains above 2 but below or equal to 3.

The percentages stated in connection with the size distribution limits are by weight.

The above-mentioned grain analysis has been developed by the present inventors and is performed as follows:
**Analysis method for grains**
   30 g of powder are added to 200 ml of 40° C water in a beaker. The mixture is stirred slowly for 20 seconds and then left for 5 minutes. The beaker is then tilted, so that the sides are moistened with solution and again placed in upright position. The amount of white spots left on the sides of the beaker is compared with standard photographs to give a rating from 1 (best) to 6.

The present process enables manufacture of products comprising very large agglomerates without having a higher content of grains than found in presently marketed less agglomerated products. Alternatively, products may be manufactured being only moderately agglomerated but containing extremely few grains.

In the present process the produced particles and agglomerates are subjected to substantially less physical handling than in prior art processes involving external separation of fine particles having been entrained in the spent drying gas and recycling thereof to the chamber. This is also one of the reasons why a superior product is obtained.

The invention also comprises an agglomerated spray dried whole or skim-milk or baby food prepared by the defined process and fulfilling one of the following three combinations of agglomerate size distribution and grains rate:
(i) : D₁₀ (< 10%): 50-100 µm, D₅₀ (< 50%): 150-225 µm, D₉₀ (< 90%): 350-450 µm and grains = 1;
(ii): D₁₀ (< 10%): 100-200 µm, D₅₀ (< 50%): 225-400 µm, D₉₀ (< 90%): 450-600 µm, and grains: above 1 but below or equal to 2;
(iii): D₁₀ (< 10%): 200-300 µm, D₅₀ (< 50%): 400-600 µm, D₉₀ (< 90%): 600-900 µm, and grains: above 2 but below or equal 3.

It is believed that a spray dried whole-milk, skim-milk or baby food presenting the combination of agglomeration size distribution and low content of grains specified under (ii) and (iii) above is a novel product, and thus a further feature of the invention is the provision of the products defined in the claims 5 and 6.

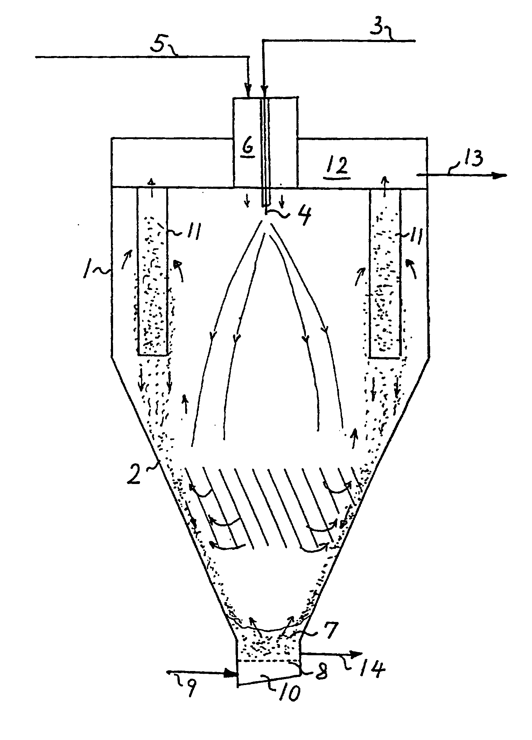

The invention is further described with reference to the drawing.

### Brief description of the drawing

In the drawing the sole figure very schematically shows a section through a spray drying apparatus with gas, droplets and particle flow indicated to illustrate the process of the invention.

### Detailed description of the invention

In the drawing a drying chamber is defined by an upper cylindrical wall 1 and a lower frusto-conical wall 2. Liquid feed in the form of a concentrate of baby food, whole-milk or skim-milk is provided through conduit 3 and by means of an atomizer 4 injected as droplets into the drying chamber.

The atomizer 4 may be of any conventional construction, such as a rotary atomizer wheel, a 2-fluid nozzle or a pressure nozzle. Preferably, it is a pressure nozzle ejecting the atomized droplets in a path forming a hollow wide cone.

For the sake of simplicity, only one atomizer is shown in the drawing. In industrial production a plurality of nozzles will often be used.

Drying gas is provided through conduit 5 and drying gas disperser 6.

In the bottom of the drying chamber a fluidized layer 7 is maintained between the lowest part of the frusto-conical walls 2 and a cylindrical prolongation thereof. Below the fluidized layer 7 is a perforated plate 8 supplied with fluidizing and drying gas through conduit 9 and plenum 10.

In the top of the drying chamber, filter elements 11 are arranged in a circular pattern through which elements spent drying gas introduced through 6 and 10 and the vapour formed by the drying are withdrawn to a plenum 12 and exhausted through a duct 13.

The integrated filters have to be fairly flexible filters to secure that fines from the surface of the filters are just released and fall straight downwards when the filter blow-back cleaning is performed. This is not possible using fairly rigid filters as the fines release in all directions due to the higher blow-back pressure needed when the filter walls are not moving, as explained above. Such flexible filters are e.g. fabric filters, bag filters of a woven polymer material possibly supported by an inner metal basket, or non-woven felt filters. Such filter materials may be coated or not.

The materials to be spray dried by the process of the invention are all rather heat-sensitive. It is also well-known in the art, that when using conventional methods especially the manufacture of highly agglomerated products involves a high risk for product failures such as grains. In spite of this, the process of the invention produces a highly agglomerated product with low grain rates, even when the inlet temperature of the drying gas introduced through 6 is between 160 and 400° C. A high drying gas inlet temperature is essential to achieve a good heat economy in the process, and, thus, the improved product qualities are obtained without increase of energy consumption as in certain prior art processes.

The flow of drying gas from 6 influences the flow path of the droplets ejected from the atomizer 4 as schematically illustrated in the drawing.

(It is to be observed that the drawing has been made without regard to a possible swirling movement imparted by the disperser 6.)

When reaching the area shown hatched in the drawing, the flow of drying gas entraining moist particles formed by drying of the droplets has to turn outwards as schematically indicated. Thereby larger particles, including agglomerates, receive a movement towards the conical chamber walls 2 whereas the drying gas with entrained smaller particles moves upwards to the filter elements 11 This movement is supported by an upward gas stream, also entraining small particles, from the fluidized layer 7. When the gas passes through the filter elements, the entrained particles settle on the surface of the filter elements and form a layer thereon.

Sophisticated systems have been developed for releasing the particles from the surface of filter elements by counter-blowing, also termed back-blowing. Reference is made to International Patent Application PCT/DK99/00400 (Niro) describing a system for releasing the particles from the filter elements in a uniform, controlled manner creating an even flow of particles falling down on the conical walls 2 in an annular area which in the drawing is somewhat above the hatched area.

Having reached the conical walls, the particles form a layer sliding downwards in direction of the fluidized layer 7.

In contrast to conventional systems in which fine particles are re-introduced into the drying chamber by pneumatical means as described for instance in the above EP 729383, Niro, the particles sliding down the conical walls in the present process are not air-borne and thus form a denser, more compact particle layer with less distance between the individual particles.

When the particle layer sliding down the walls reaches the hatched area they meet the moist particles carried down into said area by the drying gas as explained above, but is not hit by wet droplets to any substantial extent. This means that excellent conditions exist for efficient agglomeration in said area and the high concentration of particles in the sliding layer efficiently protects the chamber walls against deposition of sticky particles.

The partly agglomerated particles then slide further down into the fluidized layer 7 for further drying and agglomeration. In the layer 7 also a certain classification takes place, and fine particles and dust is blown off and agglomerated, some of them after having been separated from the gas by the filter elements 11 and released therefrom to fall down on the chamber wall and pass the hatched agglomeration area.

The products recovered from the layer 7 through exit 14 are usually subjected to an after-treatment, e.g. drying and cooling in a fluidized bed. If such an after-treatment creates a fraction of too fine particles, these may be re-introduced in the drying chamber for agglomeration as described in the International Patent Applications PCT/DK99/00511 and PCT/DK99/00512 (both to Niro).

It is essential that the positioning of the flexible filter elements 11 in the drying chamber and the release of fine particles therefrom is performed to ensure a uniform dispersion of the fine particles falling down on the conical wall above the annular horizontal area on the wall, i.e. the hatched area in the drawing, reached by the moist particles from the atomizer.

As it appears, the total process is performed without any re-wetting steps, including the conventional contact between fine particles and wet droplets near the atomizer, and this fact is reflected in the superior product qualities as explained above.

In the following, the invention is further illustrated by means of non-limiting embodiment examples and a comparison example.

### Examples

The embodiment examples were performed in an integrated fluid bed dryer as the one shown in the drawing having internal flexible filters blowing back individually for particle release. The comparison example was performed in the same drying chamber but without internal filters. Instead fine particles were collected in a cyclone and recyled. Atomization was in all five examples made by means of a pressure nozzle. The conditions and results are summarized as follows:

| Example | 1 | 2 | 3 | 4 | 5 |
|---|---|---|---|---|---|
| Product | baby food | baby food | whole-milk | whole-milk | whole-milk |
| | | | | | |
| Feed composition, % w/w: | | | | | |
| Water | 49.8 | 51.9 | 51.3 | 51.3 | 51.3 |
| Protein | 5.9 | 5.6 | 13.4 | 13.4 | 13.4 |
| Fat | 14.1 | 13.5 | 13.0 | 13.0 | 13.0 |
| Carbohydrates | 28.7 | 27.5 | 19.1 | 19.1 | 19.1 |
| Ash | 1.5 | 1.5 | 3.2 | 3.2 | 3.2 |
| | | | | | |
| Feed, °C | 44 | 44 | 56 | 65 | 63 |
| Feed, kg/h | 38.5 | 35.0 | 34.5 | 39.3 | 38.5 |
| Feed pressure, bang | 27 | 18 | 38 | 18 | 19 |
| | | | | | |
| Main air inlet, kg/h | 445 | 545 | 550 | 550 | 550 |
| Main air inlet, °C | 194 | 180 | 185 | 180 | 182 |
| Air outlet, °C | 66 | 74 | 76 | 69 | 70 |
| | | | | | |
| IFB air inlet, kg/h | 251 | 264 | 249 | 227 | 240 |
| IFB air inlet, °C | 59 | 69 | 60 | 86 | 84 |
| Dust separation | internal | internal | internal | internal | cyclone |
| | filters | filters | filters | filters | |
| | | | | | |
| Filter air load, | | | | | |
| m3/h/m2 | 175 | 208 | 186 | 193 | |
| Filter ΔP, mm WG | 37 | 34 | 37 | 36 | |
| Cyclone ΔP, mm WG | | | | | 150 |
| | | | | | |
| Powder: | | | | | |
| Moisture, % | 3.27 | 2.07 | 2.42 | 3.77 | 3.51 |
| Bulk density not | | | | | |
| tapped, g/ml | 0.48 | 0.45 | 0.52 | 0.35 | 0.40 |
| Bulk density tapped | | | | | |
| 100 times, g/ml | 0.54 | 0.50 | 0.65 | 0.41 | 0.49 |
| | | | | | |
| Free fat. % | | | 0.69 | 0.66 | 1.80 |
| | | | | | |
| Particle size distri- | | | | | |
| bution: | | | | | |
| D₁₀ (< 10%), µm | 107 | 180 | 65 | 167 | 142 |
| D₅₀ (< 50%), µm | 285 | 371 | 154 | 464 | 410 |
| D₉₀ (< 90%), µm | 517 | 619 | 400 | 724 | 702 |
| Grains | 1-2 | 2 | 1 | 2-3 | 5-6 |

As it appears, the tests comprised two examples (1 and 2) drying baby food and three examples (3, 4 and 5) drying whole-milk. The Examples 1-4 illustrate the process of the present invention, using flexible internal filters, whereas Example 5 is a comparison example performed according to prior art using an external cyclone for separating fine particles from the spent drying gas, and reintroducing the particles into the drying chamber near the atomizing nozzle.

The baby food powder produced in Example 1 has a D₅₀ value somewhat higher than what is found for the products presently marketed and at the same time the rating for grains is at level with the ratings obtained when analyzing the best products in the market.

The baby food powder produced in Example 2 has a D₅₀ value much larger than what can be found for products presently marketed. At the same time, the rating for grains is only very little inferior. Normally, such a high D₅₀ value is only obtained by conducting fine particles back into the area near the nozzle whereby the amount of grains is increased corresponding to a rating of at least 4.

Examples 3 and 4 both produce whole-milk powder. Example 3 produces a powder less agglomerated than the baby food powder of Example 1, and Example 4 produces a powder even more agglomerated than the coarse baby food powder produced in Example 2. The ratings for grains suited into the pattern for relation of the grains rate to the degree of agglomeration deducible from the Examples 1 and 2. The variation of the agglomeration rates was mainly achieved by operating the nozzle at different pressures.

The comparison Example 5 was performed using the same whole-milk concentrate starting material as in Examples 3 and 4, the internal filters were omitted, and the fine particles entrained in the spent drying gas were separated in an external cyclone and recycled to the nozzle area. The degree of agglomeration was nearly as high as in Example 4 but as far as grains is concerned the product was much inferior.

Further it appears from the table that for the whole-milk powders produced in Examples 3 and 4 an unusually low value for free surface fat was obtained. The values were substantially lower than what was obtained in Comparison Example 5 indicating a more lenient treatment than the one in the Comparison Example.

## Claims

1. A process for producing a spray dried baby food, whole-milk or skim-milk product, comprising the following steps:
atomizing a liquid concentrate of baby food, whole-milk or skim-milk as droplets centrally into the upper part of a drying chamber of which at least the lower portion is defined by a downward tapering frusto-conical wall;
introducing drying gas at a temperature of 160-400° C downwards from the top of said chamber around the atomized droplets to partially dry these to moist particles and carry them in a downward widering direction;
maintaining a fluidized particle bed at a temperature of 45-80° C in the bottom of the drying chamber and/or in a lower extension thereof, by means of an upward stream of fluidizing gas for drying, classifying and agglomeration of the particles therein;
withdrawing a stream of gas comprising spent drying gas introduced at the top of the chamber and gas from said fluidized bed and at a temperature of 60-95° C from the chamber through flexible filter elements within said chamber, thereby settling fine particles having been entrained by said stream on the surface of the filter elements;
releasing the fine particles settled on the flexible filter elements by short, moderate counter blows to cause them to fall down on the frusto-conical wall at a location at level with or above a horizontal ring-shaped area on said wall where the largest concentration of said moist particles would have reached said wall if no fine particles from the filter elements had fallen down thereon, from which location said fine particles slide downwards along the wall as a covering layer to reach said fluidized particle layer;
withdrawing an agglomerated product from the fluidized bed fulfilling one of the following three combinations of agglomerate size distribution and grains rate (dertermined by the method of analysis described herein):
(i) : D₁₀ (< 10%): 50-100 µm, D₅₀ (< 50%): 150-225 µm, D₉₀ (< 90%): 350-450 µm and grains = 1;
(ii): D₁₀ (< 10%): 100-200 µm, D₅₀ (< 50%): 225-400 µm, D₉₀ (< 90%): 450-600 µm, and grains: above 1 but below or equal to 2;
(iii): D₁₀ (< 10%): 200-300 µm, D₅₀ (< 50%): 400-600 µm, D₉₀ (< 90%): 600-900 µm, and grains: above 2 but below or equal to 3.

2. The process of claims 1, wherein the positioning of said flexible filter elements in the drying chamber and the release of fine particles settled thereon is performed to obtain a uniform dispersion of the fine particles falling down on the conical wall above the ring-shaped horizontal area on the wall reached by the moist particles from the atomizer.

3. The process of anyone of the claims 1 and 2, wherein the liquid concentrate is atomized using a pressure nozzle ejecting droplets in a cloud forming a hollow downward widening cone which, influenced by the drying gas, is directed towards the conical wall of the drying chamber.,

4. An agglomerated spray dried baby food, whole-milk or skim-milk product produced by the process of claim 1 and fulfilling one of the following three combinations of agglomerate size distribution and content of grains:
(i): D₁₀ (< 10%): 50-100 µm, D₅₀ (< 50%): 150-225 µm, D₉₀ (< 90%): 350-450 µm and grains = 1;
(ii): D₁₀ (< 10%): 100-200 µm, D₅₀ (< 50%): 225-400 µm, D₉₀ (< 90%): 450-600 µm, and grains: above 1 but below or equal to 2;
(iii): D₁₀ (< 10%): 200-300 µm, D₅₀ (< 50%): 400-600 µm, D₉₀ (< 90%): 600-900 µm, and grains: above 2 but below or equal to 3.

5. An agglomerated spray dried baby food, whole-milk or skim-milk product produced by the process of claim 1 and having an agglomerate size distribution and content of grains: D₁₀ (< 10%): 100-200 µm, D₅₀ (< 50%): 225-400 µm, D₉₀ (< 90%): 450-600 µm, and grains: above 1 but below or equal to 2.

6. An agglomerated spray dried baby food, whole-milk or skim-milk product produced by the process of claim 1 and having an agglomerate size distribution and content of grains: D₁₀ (< 10%): 200-300 µm, D₅₀ (< 50%): 400-600 µm, D₉₀ (< 90%): 600-900 µm, and grains: above 2 but below or equal to 3.

## Patentansprüche

1. Verfahren zur Herstellung eines sprühgetrockneten Babynahrungs-, Vollmilch- oder Magermilchproduktes, umfassend folgende Stufen:
Zerstäuben eines flüssigen Konzentrats von Babynahrung, Vollmilch oder Magermilch als Tropfen zentral in den Oberteil einer Trockenkammer, deren zumindest unterer Teil durch eine nach unten zuspitzende kegelstumpfförmige Wand abgegrenzt ist;
Einleiten von Trocknungsgas bei einer Temperatur von 160-400° C vom oberen Ende der Kammer nach unten um die zerstäubten Tropfen herum, um diese teilweise in feuchte Partikeln zu trocknen und in eine sich nach unten erweiternde Richtung zu führen;
Aufrechterhalten eines Partikel-Fliessbetts bei einer Temperatur von 45-80° C am Boden der Trockenkammer und/oder in einer niedrigen Verlängerung davon mit Hilfe eines Stroms aufwärts von fluidisierendem Gas zwecks Trocknen, Klassifizieren und Agglomeration der darin enthaltenen Partikeln;
Entnahme eines Stroms von Gas, das als verbrauchtes Trocknungsgas von oben in der Kammer eingeleitet wurde und Gas aus erwähntem Fliessbett umfasst, bei einer Temperatur von 60-95° C aus der Kammer über in der Kammer vorgesehene elastische Filterelemente, wodurch vom Strom mitgeführte feine Partikeln auf der Oberfläche der Filterelemente abgesetzt werden;
Lösen der auf den elastischen Filterelementen abgesetzten feinen Partikeln durch kurzen, gemässigten Gegenstoss, so dass diese Partikeln auf die kegelstumpfförmige Wand fallen an einer Stelle auf dem Niveau einer waagrechten ringförmigen Fläche der Wand oder darüber, auf welcher genannten Stelle die grösste Konzentration von feuchten Partikeln stattfände, wenn auf dieser Fläche keine feinen Partikeln von den Filterelementen hinunter gefallen wären, von welcher Stelle erwähnte feine Partikeln die Wand entlang als eine Deckschicht nach unten gleiten, um die fluidisierte Partikelschicht zu erreichen;
Entnahme eines agglomerierten Produktes aus dem Fliessbett, welches Produkt eine der folgenden drei Kombinationen von Agglomerat-Grössenverteilung und "grains rate" (durch obenstehende Methode von Analyse ermittelt) erfüllt:
(i): D₁₀ (<10%): 50-100 µm, D₅₀ (<50%): 150-225 µm, D₉₀ (<90%): 350-450 µm und Grains = 1;
(ii): D₁₀ (< 10%): 100-200 µm, D₅₀ (< 50%): 225-400 µm, D₉₀ (<90%): 450-600 µm, und Grains: über 1, aber unter oder gleich mit 2;
(iii): D₁₀ (< 10%) 200-300 µm, D₅₀ (< 50%): 400-600 µm, D₉₀ (<90%): 600-900 µm, und Grains: über 2, aber unter oder gleich mit 3.

2. Verfahren nach Anspruch 1, nach welchem das Anbringen der elastischen Filterelemente in der Trockenkammer und das Lösen darauf angesammelter feiner Partikeln zum Erzielen einer gleichmässigen Verteilung von feinen Partikeln, die auf die konische Wand über der ringförmigen waagrechten Fläche der von den feuchten Partikeln vom Zerstäuber erreichten Wand fallen, durchgeführt wird.

3. Verfahren nach einem der Ansprüche 1 und 2, nach welchem das flüssige Konzentrat unter Verwendung einer Druckdüse zerstäubt wird, wobei die Druckdüse Tropfen in einen Nebel ausschleudert und ein hohler nach unten sich erweiternder Konus gebildet wird, der unter Einfluss des Trockengases gegen die konische Wand der Trockenkammer gerichtet ist.

4. Nach dem Verfahren nach Anspruch 1 hergestelltes agglomeriertes sprühgetrocknetes Babynahrungs-, Vollmilch- oder Magermilchprodukt, welches Produkt eines der folgenden drei Kombinationen von Agglomerat-Grössenverteilung und Gehalt an Grains erfüllt:
(i): D₁₀ (<10%): 50-100 µm, D₅₀ (<50%): 150-225 µm, D₉₀ (<90%): 350-450 µm und Grains = 1;
(ii): D₁₀ (< 10%): 100-200 µm, D₅₀ (< 50%): 225-400 µm, D₉₀ (<90%): 450-600 µm, und Grains: über 1, aber unter oder gleich mit 2;
(iii): D₁₀ (< 10%) 200-300 µm, Dₛₒ (< 50%): 400-600 µm, D₉₀ (<90%): 600-900 µm, und Grains: über 2, aber unter oder gleich mit 3.

5. Agglomeriertes sprühgetrocknetes Babynahrungs-Vollmilch- oder Magermilchprodukt, hergestellt durch das Verfahren nach Anspruch 1 und mit folgender Agglomerat-Grössenverteilung und Gehalt an Grains: D₁₀ (< 10%): 100-200 µm, D₅₀ (< 50%): 225-400 µm, D₉₀ (<90%): 450-600 µm, und Grains: über 1, aber unter oder gleich mit 2.

6. Agglomeriertes sprühgetrocknetes Babynahrungs-Vollmilch- oder Magermilchprodukt, hergestellt durch das Verfahren nach Anspruch 1 und mit folgender Agglomerat-Grössenverteilung und Gehalt an Grains: D₁₀ (< 10%): 200-300 µm, D₅₀ (< 50%): 400-600 µm, D₉₀ (<90%): 600-900 µm, und Grains: über 2, aber unter oder gleich mit 3.

## Revendications

1. Procédé permettant de fabriquer un produit d'aliment pour nourrisson, de lait entier ou de lait écrémé, produit qui est séché par pulvérisation, comprenant les étapes suivantes :
atomiser un concentré liquide d'aliment pour nourrisson, de lait entier ou de lait écrémé comme des gouttes au centre dans la portion supérieure d'une chambre de séchage, dont au moins la portion inférieure est définie par une paroi tronconique et pointue vers le bas ;
introduire du gaz de séchage à une température de 160-400 °C vers le bas depuis la portion supérieure de ladite chambre autour des gouttes atomisées pour les sécher partiellement à des gouttes moites et les guider dans une direction s'élargissant vers le bas ;
maintenir un lit fluide de particules à une température de 45-80 °C au fond de la chambre de séchage et/ou dans une extension inférieure de celle-ci, au moyen d'un courant vers le haut de gaz fluidisant pour séchage, classification et agglomération des particules y comprises ;
retirer un courant de gaz comprenant du gaz de séchage usé introduit à la portion supérieure de la chambre et du gaz dudit lit fluide et à une température de 60-95 °C de la chambre à travers des éléments filtres flexibles dans ladite chambre, déposant ainsi de fines particules ayant été entraînées par ledit courant sur la surface des éléments de filtre ;
dégager les fines particules déposées sur les éléments filtres flexibles par des courts contrecoups modérés pour les faire tomber sur la paroi tronconique à un endroit au niveau ou au-dessus d'une étendue horizontale et annulaire sur ladite paroi où la plus grande concentration desdites particules moites se serait amassée, si aucunes fines particules des éléments filtres n'y étaient tombées, à partir duquel endroit lesdites fines particules glissent vers le bas le long de la paroi comme une couche de couverture pour atteindre ladite couche de particules fluidisées ;
retirer un produit aggloméré du lit fluide, produit qui remplit l'une des trois combinaisons suivantes de distribution de dimensions de l'aggloméré et de « grains rate » (déterminées par le procédé d'analyse décrit ici) :
(i) : D₁₀ (<10%): 50-100 µm, D₅₀ (<50%): 150-225 µm, D₉₀ (<90%): 350-450 µm et grains = 1;
(ii): D₁₀ (< 10%): 100-200 µm, D₅₀ (< 50%): 225-400 µm, D₉₀ (<90%): 450-600 µm, et grains: supérieurs à 1, mais inférieurs ou équivalents à 2;
(iii): D₁₀ (< 10%): 200-300 µm, D₅₀ (< 50%): 400-600 µm, D₉₀ (<90%): 600-900 µm, et grains: supérieurs à 2, mais inférieurs ou équivalents à 3.

2. Procédé selon la revendication 1, dans lequel le positionnement desdits éléments filtres flexibles dans la chambre de séchage et le dégagement de fines particules y déposées sont effectués pour obtenir une dispersion uniforme des fines particules tombant sur la paroi conique au-dessus de l'étendue horizontale et annulaire sur la paroi atteinte par les particules moites de l'atomiseur.

3. Le procédé selon l'une quelconque des revendications 1 et 2, dans lequel le concentré liquide est atomisé au moyen d'une tuyère à pression éjectant des gouttes dans un nuage formant un cône creux et s'élargissant vers le bas qui, sous l'influence du gaz de séchage, est dirigé vers la paroi conique de la chambre de séchage.

4. Produit d'aliment pour nourrisson, de lait entier ou de lait écrémé, produit qui est aggloméré et séché par pulvérisation et fabriqué selon le procédé de la revendication 1 et remplissant l'une des trois combinaisons suivantes de distribution de dimensions de l'aggloméré et de teneur en grains :
(i) : D₁₀ (<10%): 50-100 µm, D₅₀ (<50%): 150-225 µm, D₉₀ (<90%): 350-450 µm et grains = 1;
(ii) : D₁₀ (< 10%): 100-200 µm, D₅₀ (< 50%): 225-400 µm, D₉₀ (<90%): 450-600 µm, et grains: supérieurs à 1, mais inférieurs ou équivalents à 2;
(iii): D₁₀ (< 10%): 200-300 µm, D₅₀ (< 50%): 400-600 µm, D₉₀ (<90%): 600-900 µm, et grains: supérieurs à 2, mais inférieurs ou équivalents à 3.

5. Produit d'aliment pour nourrisson, de lait entier ou de lait écrémé, produit qui est aggloméré et séché par pulvérisation et fabriqué selon le procédé de la revendication 1 et présentant une distribution de dimensions de l'aggloméré et de teneur en grain : D₁₀ (< 10%): 100-200 µm, D₅₀ (< 50%): 225-400 µm, D₉₀ (<90%): 450-600 µm, et grains: supérieurs à 1, mais inférieurs ou équivalents à 2.

6. Produit d'aliment pour nourrisson, de lait entier ou de lait écrémé, produit qui est aggloméré et séché par pulvérisation et fabriqué selon le procédé de la revendication 1 et présentant une distribution de dimensions de l'aggloméré et de teneur en grains : D₁₀ (< 10%): 200-300 µm, D₅₀ (< 50%): 400-600 µm, D₉₀ (<90%): 600-900 µm, et grains: supérieurs à 2, mais inférieurs ou équivalents à 3.
